# EUROPEAN PATENT SPECIFICATION

(11) **EP 0 894 063 B1**
(45) Date of publication and mention of the grant of the patent: **08.12.1999**
(21) Application number: 97916573.5
(22) Date of filing: 15.04.1997
(51) Int. Cl.: B62D 1/18

(54) **ADJUSTABLE STEERING COLUMN ASSEMBLY FOR A VEHICLE**
VERSTELLBARE LENKSÄULE FÜR EIN FAHRZEUG
ASSEMBLAGE COLONNE DE DIRECTION REGLABLE POUR VEHICULE

(30) Priority: 18.04.1996 GB 9608022
(43) Date of publication of application: 03.02.1999
(73) Proprietor: Nastech Europe Limited, Coventry, Warwickshire CV4 9AE (GB)
(72) Inventor: HENRY-MOORE, Nicholas, Northamptonshire NN12 8NR (GB)
(74) Representative: Feakins, Graham Allan
(86) International application number: GB9701038
(87) International publication number: WO9738889

(56) References cited:
- EP-A- 0 641 705
- DE-C- 3 914 608
- US-A- 5 452 624

## Description

This invention relates to an adjustable steering column assembly for a vehicle.

With adjustable steering columns, there is a need to minimise movement of the column, when set at any adjustment position, when a load is applied on the steering wheel by the driver in the event of a vehicle crash.

US-A-5029 489 shows an adjustable steering column in accordance with the preamble of claim 1.

According to the present invention, there is provided an adjustable steering column assembly with adjustment setting means having a moveable part inter-engageable with a fixed part, the adjustment setting means incorporating locking means to inhibit movement of the steering column out of its set adjusted position in the event of vehicle crash, said locking means being actuable by an operating device for said adjustment setting means and including a rotatable lever with a free end which is rotatable into a locking engagement position with a detent member associated with said fixed and moveable parts to prevent these parts coming out of engagement.

The invention is particularly applicable to a rake adjustable steering column, where the column can be adjusted in a vertical direction. The steering column can be of the so-called neck tilting type.

The rotatable lever can be resiliently biassed into its locking engagement position.

The fixed and moveable parts can be inter-engageable toothed components. These parts can be urged together by resilient means, whilst the operating device can include a handle which is provided to act through a lever lifting pin to lift one of the parts away from the other to allow tilt adjustment of the steering column. The fixed toothed component can be mounted on a bracket housing itself secured to a cross member of the vehicle. The moveable toothed component is then mounted to the tilting part of the steering column.

The detent member can be a bolt with a head, the bolt passing through the fixed and moveable parts, there being a gap between the underside of the head of the bolt and the moveable part to receive the free end of the rotatable lever in its locking engagement position thereby to prevent the moveable part coming out of engagement with the fixed part.

Movement of the operating handle in one direction against the resilient bias(ses) moves both the rotatable lever out of engagement with the detent member on the moveable toothed portion and the moveable toothed portion out of engagement with the fixed toothed portion to allow tilt adjustment of the steering column. Movement of the operating handle in the opposite direction allows the two parts to inter-engage and the locking lever to lock them in engagement.

The invention also extends to a vehicle incorporating such a steering column assembly.

For a better understanding of the invention and to show how the same may be carried into effect, reference will now be made, by way of example, to the accompanying drawing, in which:-
Figure 1 is a diagrammatic side view of a vehicle steering column assembly, which is neck-tilt adjustable, and
Figure 2 is a diagrammatic perspective view of the adjustment mechanism of the assembly shown in Figure 1.

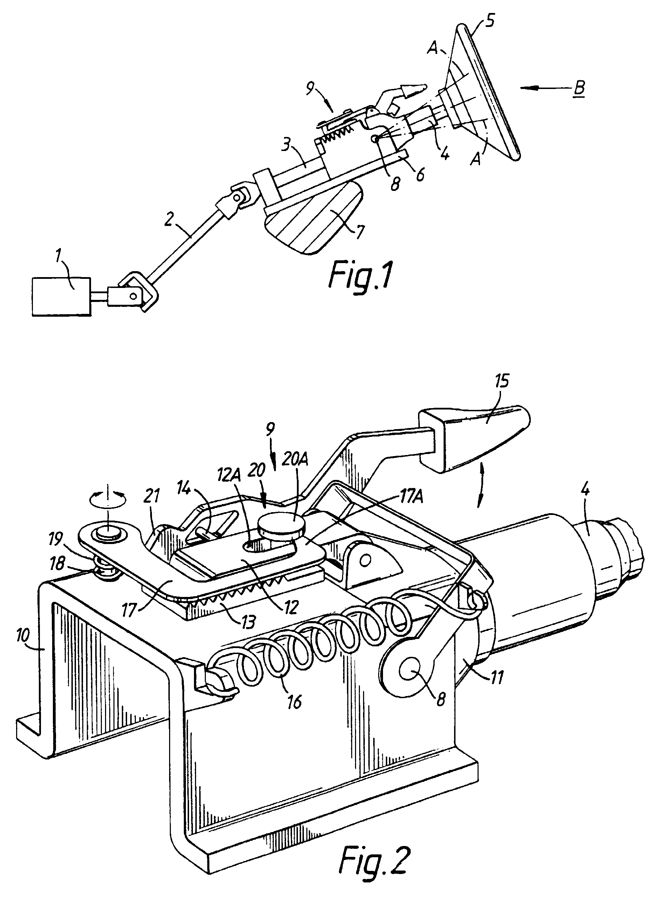

Figure 1 illustrates a neck-tilt adjustable steering column assembly including a steering box 1, a lower steering column 2, an intermediate steering column 3, an upper steering column 4 and a steering wheel 5. The intermediate steering column 3 is mounted on a mounting bracket 6 which itself is secured to a vehicle cross beam 7. The upper steering column 4 is adjustable or tiltable in a vertical direction about an axis 8 by means of an adjustment setting means 9, the adjustment range being indicated by the two arrows A.

The arrow B in Figure 1 indicates the general direction of loading which would be applied by the driver on the steering wheel in the event of frontal vehicle crash, whether or not an airbag is deployed. As more clearly illustrated in Figure 2, the upper steering column 4 is tiltable about the axis 8 between a bracket housing 10 and a tilt box 11. The tilt box 11, which tilts with tilting of the upper steering column 4, is held in a desired adjusted position via a moveable part in the form of a moveable toothed component 12 attached to the tilt box 11. The component 12 is inter-engageable with a fixed part in the form of a toothed component 13 which is attached to the bracket housing 10. Adjustment is facilitated by an operating device disengaging the toothed components 12 and 13 via a lever lifting pin 14, which is operated by an operating handle 15. A vertical force is applied to the steering wheel 5 to achieve the desired position of it and then the operating handle 15 is released and a handle return spring 16 causes the toothed components 12 and 13 to be re-engaged.

The mechanism so far described is only able to sustain relatively low radial loads applied at the steering wheel 5 before disengaging and allowing the tilting upper steering column 4 to move to the extremities of its adjustment stroke. In other words, if the steering column has been set in, for example, a mid-position, then there is the risk of the steering wheel lifting to the end of its adjustment stroke in the event of vehicle crash.

In order to be able to sustain relatively high radial loads applied at the steering wheel by the driver during a frontal crash of the vehicle, a locking means is provided which acts in co-ordination with the inter-engagement of the toothed components 12 and 13.

The locking means includes a locking pawl or lever 17, which revolves about a pivot pin 18 which itself is fixed to the bracket housing 10. The locking lever 17 is resiliently loaded by a return spring 19, which ensures that the locking lever 17 is active when the operating handle 15 is not in use, the spring 19 urging a free end 17A of the locking lever 17 into engagement with a detent in the form of a stop bolt 20 which is fixed to the bracket housing 10 and passes through an aperture (not shown) in the fixed toothed component 13 and through a slot 12A in the moveable toothed component 12. The bolt 20 has a head 20A, the underside of which is spaced from the upper surface of the moveable toothed component 12 when the toothed components 12 and 13 are inter-engaged. This space just allows for the entry of the free end 17A of the locking lever 17 therebetween, which thereby prevents the toothed component 12 jumping out of engagement with the toothed component 13.

To release the free end 17A of the locking lever 17 from engagement with the detent bolt 20, a cam 21 is provided on a part of the operating handle 15, which presses against an edge of the locking lever 17 to rotate it out of engagement at around the same time as the lifting pin 14 lifts the toothed component 12 out of engagement with the toothed component 13 to allow adjustment of the upper steering column 4.

Whilst the invention has been described particularly with reference to a rake adjustable steering column, it is envisaged that it would also equally apply to a steering column that is reach adjustable, or both.

## Claims

1. An adjustable steering column assembly with adjustment setting means having a moveable part (12) inter-engageable with a fixed part (13), the adjustment setting means incorporating locking means to inhibit movement of the steering column out of its set adjusted position in the event of vehicle crash and said locking means being actuable by an operating device for said adjustment setting means; characterised in that said locking means includes a rotatable lever (17) with a free end (17A) which is rotatable into a locking engagement position with a detent member (20) associated with said fixed (13) and moveable (12) parts to prevent these parts coming out of engagement.

2. An assembly according to claim 1 and being a rake adjustable steering column assembly.

3. An assembly according to claim 2, wherein the steering column is of a neck tilting type.

4. An assembly according to claim 1, 2 or 3, wherein the fixed and moveable parts are inter-engageable toothed components (12, 13).

5. An assembly according to any one of the preceding claims, wherein the fixed and moveable parts are urged together by resilient means (16).

6. An assembly according to any one of the preceding claims, wherein said rotatable lever (17) is resiliently biassed into its locking engagement position.

7. An assembly according to any one of the preceding claims, wherein the operating device includes a handle (15) which acts through a lever lifting pin (14) to lift the moveable part (12) out of engagement with the fixed part (13) to allow adjustment of the steering column.

8. An assembly according to any one of the preceding claims, wherein the detent member (20) is a bolt with a head (20A), the bolt passing through the fixed and moveable parts (12, 13), there being a gap between the underside of the head of the bolt and the moveable part to receive the free end (17A) of the rotatable lever (17) in its locking engagement position, thereby to prevent the moveable part coming out of engagement with the fixed part.

9. An assembly according to any one of the preceding claims, wherein the operating device is provided with a cam (21) which acts on the rotatable lever (17) to rotate the rotatable lever into and out of engagement with the detent member (20).

10. A vehicle incorporating a steering column assembly according to any one of the preceding claims.

## Patentansprüche

1. Verstellbare Lenksäulenanordnung mit einer Verstellungs-Einstell-Einrichtung, die ein bewegliches Teil (12) hat, das mit einem festen Teil (13) in Eingriff bringbar ist, wobei die Verstellungs-Einstell-Einrichtung ein Verriegelungsmittel aufweist, um eine Bewegung der Lenksäule aus ihrer eingestellten Verstellposition heraus im Falle eines Fahrzeugcrashs zu verhindern, und wobei das Verriegelungsmittel durch eine Betätigungsvorrichtung für die Verstellungs-Einstell-Einrichtung betätigbar ist, **dadurch gekennzeichnet**, daß das Verriegelungsmittel einen drehbaren Hebel (17) mit einem freien Ende (17A) aufweist, der in eine Verriegelungs-Eingriffs-Stellung mit einem vorragenden Glied (20) verdrehbar ist, das den festen (13) und beweglichen (12) Teilen zugeordnet ist, um diese Teile daran zu hindern, außer Eingriff zu geraten.

2. Anordnung nach Anspruch 1, die eine in der Neigung einstellbare Lenksäulenanordnung ist.

3. Anordnung nach Anspruch 2, bei der die Lenksäule von der Art ist, die am Hals neigbar ist.

4. Anordnung nach Anspruch 1, 2 oder 3, bei der die festen und beweglichen Teile miteinander in Eingriff bringbare verzahnte Komponenten (12, 13) sind.

5. Anordnung nach einem der vorhergehenden Ansprüche, bei der die festen und beweglichen Teile durch nachgiebige Mittel (16) gegeneinander gedrückt werden.

6. Anordnung nach einem der vorhergehenden Ansprüche, bei der der verdrehbare Hebel (17) nachgiebig in seine Verriegelungs-Eingriffs-Stellung vorgespannt ist.

7. Anordnung nach einem der vorhergehenden Ansprüche, bei der die Betätigungsvorrichtung einen Handgriff (15) aufweist, der über einen Hebel-Anhebestift (14) wirkt, um das bewegliche Teil (12) außer Eingriff mit dem festen Teil (13) anzuheben, um eine Verstellung der Lenksäule zu ermöglichen.

8. Anordnung nach einem der vorhergehenden Ansprüche, bei der das vorragende Glied (20) ein Bolzen mit einem Kopf (20A) ist, wobei der Bolzen durch die festen und beweglichen Teile (12, 13) hindurchgeht, wobei ein Spalt zwischen der Unterseite des Kopfes des Bolzens und dem beweglichen Teil besteht, um das freie Ende (17A) des verdrehbaren Hebels (17) in seiner Verriegelungs-Eingiffs-Stellung aufzunehmen, um dadurch das bewegliche Teil daran zu hindern, außer Eingriff mit dem festen Teil zu geraten.

9. Anordnung nach einem der vorhergehenden Ansprüche, bei der die Betätigungsvorrichtung mit einem Nocken (21) versehen ist, der auf den verdrehbaren Hebel (17) wirkt, um den verdrehbaren Hebel in und außer Eingriff mit dem vorragenden Glied (20) zu verdrehen.

10. Fahrzeug mit einer Lenksäulenanordnung nach einem der vorhergehenden Ansprüche.

## Revendications

1. Ensemble de colonne de direction réglable avec des moyens de réglage ayant une partie mobile (12) pouvant être interengagée avec une partie fixe (13), les moyens de réglage incorporant des moyens de blocage afin d'empêcher un mouvement de la colonne de direction hors de sa position ajustée dans le cas d'un accident de véhicule et lesdits moyens de blocage pouvant être actionnés par un dispositif d'actionnement pour lesdits moyens de réglage d'ajustement; caractérisé en ce que lesdits moyens de blocage comprennent un levier rotatif (17) avec une extrémité libre (17A) qui peut tourner dans une position d'engagement de blocage avec un élément de cliquet (20) associé aux dites parties fixe (13) et mobile (12) afin d'empêcher ces parties de sortir de l'engagement.

2. Ensemble selon la revendication 1 et qui est un ensemble de colonne de direction réglable en hauteur.

3. Ensemble selon la revendication 2, dans lequel la colonne de direction est d'un type à basculement.

4. Ensemble selon la revendication 1, 2 ou 3, dans lequel les parties fixe et mobile sont des composants dentés pouvant être interengagés (12, 13).

5. Ensemble selon l'une quelconque des revendications précédentes, dans lequel les parties fixe et mobile sont poussées ensemble par des moyens élastiques (16).

6. Ensemble selon l'une quelconque des revendications précédentes, dans lequel ledit levier rotatif (17) est rappelé élastiquement dans sa position d'engagement de blocage.

7. Ensemble selon l'une quelconque des revendications précédentes, dans lequel le dispositif d'actionnement comprend une poignée (15) qui agit par l'intermédiaire d'un axe de soulèvement de levier (14) afin de soulever la partie mobile (12) hors d'engagement avec la partie fixe (13) de façon à permettre le réglage de la colonne de direction.

8. Ensemble selon l'une quelconque des revendications précédentes, dans lequel l'élément de cliquet (20) est un boulon avec une tête (20A), le boulon passant à travers les parties fixe et mobile (12, 13), un espace existant entre le côté inférieur de la tête du boulon et la partie mobile afin de recevoir l'extrémité libre (17A) du levier rotatif (17) dans sa position d'engagement de blocage, afin d'empêcher ainsi la partie mobile de sortir de l'engagement avec la partie fixe.

9. Ensemble selon l'une quelconque des revendications précédentes, dans lequel le dispositif d'actionnement est pourvu d'une came (21) qui agit sur le levier rotatif (17) afin de faire tourner le levier rotatif dans et hors d'engagement avec l'élément de cliquet (20).

10. Véhicule incorporant un ensemble de colonne de direction selon l'une quelconque des revendications précédentes.
